# EUROPEAN PATENT SPECIFICATION

(11) **EP 2 375 049 B1**
(45) Date of publication and mention of the grant of the patent: **12.12.2012**
(21) Application number: 11250326.3
(22) Date of filing: 16.03.2011
(51) Int. Cl.: F02M 37/22, B62J 37/00, B62K 19/46

(54) **Motorcycle**
Motorrad
Motocyclette

(30) Priority: 31.03.2010 JP 2010082559
(43) Date of publication of application: 12.10.2011
(73) Proprietor: Honda Motor Co., Ltd., Minato-ku Tokyo 107-8556 (JP)
(72) Inventor: YAMADA, Hiroshi, Wako-shi Saitama 351-0193 (JP)
(74) Representative: Stevens, Jason Paul

(56) References cited:
- EP-A1- 1 864 900
- EP-A1- 2 305 546
- JP-A- 1 148 678
- JP-A- 2003 205 877
- JP-A- 2008 163 875

## Description

The present invention relates to an improvement in a motorcycle, and in particular to an improvement of the layout of a fuel filter provided in a motorcycle.

In one known form of motorcycle, a fuel filter is provided at an intermediate part of a fuel supply line for supplying a fuel in a fuel tank to a combustion chamber of an engine (see, for example, Figs 1 and 2 of JP 2008-163875).

As shown in Fig. 1 of JP 2008-163875, in the motorcycle (1) (here, parenthesized symbols are reference numerals as used in JP 2008-163875), the fuel in the fuel tank (24) is clarified by the fuel filter (28) at an intermediate part of the fuel supply line, and the thus clarified fuel is supplied to the engine (12).

However, since the fuel filter (28) is disposed on the lower side of a storage box (23), it is necessary to demount the storage box (23) at the time of maintenance of the fuel filter (28). Therefore, maintenance work for the fuel filter (28) has been bothersome. Thus, there is a need for a motorcycle in which maintenance of a fuel filter can be carried out easily.

Document JP 2003-205 877 shows that a fuse box can be located beneath a storage box. The storage box comprises an opening that is covered by a detachable maintenance lid and that can be removed to allow access to the fuse box.

It is an object of at least the preferred embodiments of the present invention to provide a motorcycle in which maintenance of a fuel filter can be carried out easily.

According to a first aspect of the invention, there is provided a motorcycle including a storage box which is at an upper portion thereof, a seat which is provided on the upper side of the storage box and with which an opening of the storage box is opened and closed, a fuel supply line through which a fuel in a fuel tank is supplied to an engine, and a fuel filter disposed at an intermediate portion of the fuel supply line, wherein the storage box includes a filter storing part which is formed as one body with the storage box and in which the fuel filter is stored, and a maintenance lid with which an opening of the filter storing part is opened and closed.

At the time of maintenance of the fuel filter, maintenance is conducted by opening the seat and then opening the maintenance lid in the storage box. Therefore, the need to dismount the storage box at the time of performing maintenance of the fuel filter as in the prior art is eliminated, and the maintenance work for the fuel filter can be carried out easily.

Further, since the maintenance lid for covering the opening of the filter storing part is provided, interference between the fuel filter and other component parts stored in the storage box can be prevented from occurring.

In a preferred form, the filter storing part is provided between the fuel tank and the engine. With this arrangement, the fuel filter can be disposed while preventing the fuel supply line connecting the fuel tank and the engine to each other from becoming redundant.

In a further preferred form, the storage box includes a battery storing part for storing a battery therein adjacently to the filter storing part, and an opening of the battery storing part can also be opened and closed with the maintenance lid.

Since the maintenance lid for the battery and the maintenance lid for the fuel filter are one and the same, a reduction in the number of component parts can be contrived.

Furthermore, since at the time of maintenance of the battery or of the fuel filter, the maintenance of the other of the two members can be performed simultaneously. Accordingly, maintenance work for the battery and the fuel filter can be carried out efficiently.

In a preferred form, the fuel tank is provided on the vehicle front side relative to the engine; the engine is vertically swingably supported on a body frame on the vehicle rear side of the fuel tank; and the storage box extends toward the lower side of the vehicle in such a manner as to enter into a space between the fuel tank and the engine, and the filter storing part and the battery storing part are disposed in the downwardly extending lower portion.

With this arrangement, the battery which is a heavy member is disposed on the lower side in the vehicle, and so a lowering of the centre of gravity of the vehicle can be achieved.

Further, since the battery storing part and the filter storing part are both disposed forwardly of the engine which is swung in the vertical direction, the battery storing part and the filter storing part can be secured to be large and a large-sized fuel filter can be used, without any restriction imposed by the swinging of the engine and without imposing any restriction on the swinging of the engine.

Preferably, a bottom surface of the filter storing part is above a bottom surface of the battery storing part. Therefore, at the time of maintenance of the fuel filter, it is easy for a hand to reach the fuel filter inside the storage box. Accordingly, the maintenance work can be carried out easily.

In a preferred form, the filter storing part has a front wall and a rear wall, the front wall being provided with a front-side opening for the fuel supply line, and the rear wall being provided with a rear-side opening for the fuel supply line; and the bottom surface of the filter storing part is inclined so as to be lower on the side of the fuel tank provided on the front side of the filter storing part.

With this arrangement, even if a portion of the fuel drips from the fuel filter at the time when the fuel filter is dismounted, the dripped fuel portion can flow to the fuel tank side.

Preferably, the fuel supply line is provided with a fuel supply device by which the fuel in the fuel tank is supplied to the engine, and with a fuel pump by which the fuel in the fuel tank is fed under pressure to the fuel supply device; and the fuel supply device is disposed at a position above the fuel filter.

This arrangement ensures that the fuel supply line between the fuel filter and the fuel supply device extends upward from the fuel filter. Therefore, leakage of the fuel from the fuel supply device due to the weight of the fuel collected in the fuel filter can be restrained, even when the vehicle is parked for a long period of time.

In a preferred form, the fuel supply line is provided with a pressure regulator which is disposed between the fuel filter and the fuel supply device and by which a portion of the fuel is returned to the fuel tank when the fuel pressure between the fuel pump and the fuel supply device is increased to reach a predetermined pressure, and the pressure regulator is disposed between the fuel pump and the fuel supply device in the vehicle front-rear direction.

Thus, the fuel supply line from the fuel pump to the fuel supply device can be prevented from becoming redundant.

Preferably, the fuel supply line is provided with a pre-pump filter upstream of the fuel pump, and the fuel filter is set to have a finer pore size than the pre-pump filter. Thus, the pore size in the fuel filter and the pore size in the pre-pump filter are set different from each other. This ensures that even in the case of using a fuel containing fine dust, such as ethanol, coarser dust can be trapped by the pre-pump filter and finer dust which is not trapped by the pre-pump filter can be trapped by the fuel filter. Accordingly, a fuel such as ethanol can also be used.

In addition, since coarser dust is trapped by the pre-pump filter and therefore coarser dust is not trapped by the fuel filter, the possibility of clogging of the fuel filter can be lowered, and the frequency of replacement of the fuel filter can be lowered. Further, since the pre-pump filter is coarser in pore size, the possibility of clogging thereof can be lowered, so that the pre-pump filter is restrained from constituting a resistance against the operation of the fuel pump. This enables adoption of an inexpensive fuel pump.

Preferred embodiments of the invention will now be described by way of example only and with reference to the accompanying drawings, in which:
FIG. 1 is a side view of a motorcycle according to a first embodiment of the present invention;
FIG. 2 is a perspective view of a storage box and a maintenance lid;
FIG. 3 is a plan view of the motorcycle according to the first embodiment of the present invention;
FIG. 4 is a plan view of a part of the motorcycle;
FIG. 5 is a perspective view of a filter storing part;
FIG. 6 illustrates a mounting part;
FIG. 7 is a sectional view of the fuel filter;
FIG. 8 is a sectional view of a pressure regulator;
FIG. 9 is a system diagram of a fuel supply line;
FIG. 10 is a side view of a motorcycle according to a second embodiment;
FIG. 11 is a plan view of a part of the motorcycle according to the second embodiment;
FIG. 12 is a perspective view of a filter storing part according to the second embodiment;
FIG. 13 is a side view of the filter storing part according to the second embodiment; and
FIG. 14 is a perspective view of a storage box and a maintenance lid according to the second embodiment.

Preferred embodiments of the present invention will be described below based on the accompanying drawings. The drawings are to be viewed according to the orientation of the reference symbols, and arrows marked FRONT in the drawings indicate the front of vehicle in normal use.

Example 1, a first embodiment of the present invention, will be described based on the drawings.

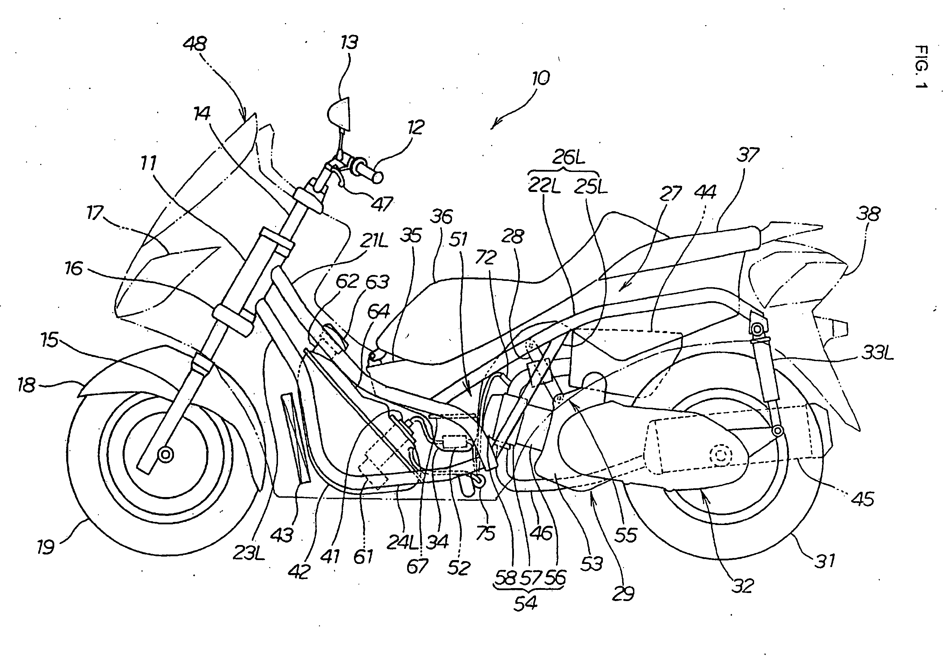

As shown in FIG. 1, a motorcycle 10 includes a handlebar 12 steerably mounted to a head pipe 11, side mirrors 13 which extend upwardly from the handlebar 12 and by which the driver can see behind the vehicle, a stem pipe 14 mounted to the lower end of the handle 12, a bottom bridge 16 which is mounted to the lower end of the stem pipe 14 and which supports the upper ends of a pair of left and right front forks 15, a headlamp 17 which is disposed on the front side of the head pipe 11, and a front wheel 19 which is supported on the front forks 15 and the upper side of which is covered with a front fender 18.

In addition, a pair of right and left main frames 21 R, 21 L (only 21 L is shown) extend downwardly and rearwardly from the head pipe 11. A pair of right and left seat rails 22R, 22L (only 22L is shown) extend from intermediate portions of the main frames 21 R, 21 L toward a rear upper side of the vehicle; a pair of right and left down tubes 23R, 23L (only 23L is shown) extend toward a rear lower side from the head pipe 11 on the lower side of the main frames 21 R, 21 L; a pair of right and left lower pipes 24R, 24L (only 24L is shown) extend from the lower ends of the down tubes 23R, 23L toward the vehicle rear side; and a pair of right and left sub frames 25R, 25L (only 25L is shown) extend toward a rear upper side of the vehicle from the rear ends of the main frames 21 R, 21 L toward the pair of right and left seat rails 22R, 22L (only 22L is shown).

The seat rails 22R, 22L and the sub frames 25R, 25L can be considered to constitute rear frames 26R, 26L (only 26L is shown), and the rear frames 26R, 26L extend from rear portions of the main frames 21 R, 21 L toward a rear upper side of the vehicle.

The head pipe 11, the main frames 21 R, 21 L, the down tubes 23R, 23L, the lower pipes 24R, 24L, the seat rails 22R, 22L and the sub frames 25R, 25L and the like constitute a body frame 27.

A unit swing type engine 29 is supported on the body frame 27 (the rear frames 26R, 26L, specifically, the seat rails 22R, 22L) through a link 28 in a vertically swingable manner, and the unit swing type engine 29 is provided with a power transmission mechanism 32 for transmitting the power of the unit swing type engine 29 to a rear wheel 31. A pair of right and left rear cushions (shock absorbers) 33R, 33L extend from the rear ends of the seat rails 22R, 22L toward the rear end of the power transmission mechanism 32.

A storage box 35 having an extension part 34 which extends downwardly is supported on the main frames 21 R, 21 L and the seat rails 22R, 22L; a front seat 36 on which the driver is seated is disposed on the upper side of the storage box 35; a rear seat 37 on which a pillion passenger is seated is disposed on the rear side of the front seat 36; a rear brake light 38 is disposed on the rear side of the rear seat 37; and a fuel tank 42 having a fuel pump 41 for feeding a fuel under pressure is supported on the down tubes 23R, 23L and the lower pipes 24R, 24L.

The storage box 35 is provided between the fuel tank 42 and the unit swing type engine 29. Specifically, the storage box 35 is so disposed that the extension part 34 thereof enters into the space between the fuel tank 42 and the unit swing type engine 29.

In addition, a radiator 43 by which cooling water warmed by the unit swing type engine 29 is cooled is disposed on the front side of the fuel tank 42, an air cleaner 44 for supplying air to the unit swing type engine 29 is disposed on the upper side of the unit swing type engine 29, an exhaust pipe 46 for feeding out an exhaust gas extends from the lower side of the unit swing type engine 29 toward a muffler 45 disposed on the right side of the vehicle, a brake lever 47 for operating to brake the rear wheel 31 is mounted to the handle 12, and the vehicle body is covered with a body cover 48 indicated by broken lines.

A fuel supply line 51 for feeding the fuel in the fuel tank 42 to the unit swing type engine 29 is provided near the centre of the vehicle, and a fuel filter 52 is provided at an intermediate portion of the fuel supply line 51.

The unit swing type engine 29 has a crankcase 53 for containing a crankshaft therein, and a cylinder unit 54 projecting from the crankcase 53 toward the vehicle front side, and an upper portion 55 of the crankcase 53 is connected to the body frame 27 through a link 28.

The cylinder unit 54 is composed of a cylinder block 56 projecting forward from a front portion of the crankcase 53, a cylinder head 57 provided at the front end of the cylinder block 56, and a head cover 58 provided at the front end of the cylinder head 57.

In addition, the fuel supply line 51 is provided with a pre-pump filter 61 on the upstream side of the fuel pump 41, and the fuel filter 52 is set to have a finer pore size than the pre-pump filter 61.

The fuel tank 42 has a fuel supply port 62 disposed on the front side of the front seat 36, and the fuel supply port 62 is closed with a fuel supply cap 63. The fuel tank 42 is inclined rearwardly downward from the position of the fuel supply port 62, and the fuel pump 41 is provided at a lower portion of the inclined part 64.

The storage box 35 and a maintenance lid will now be described.

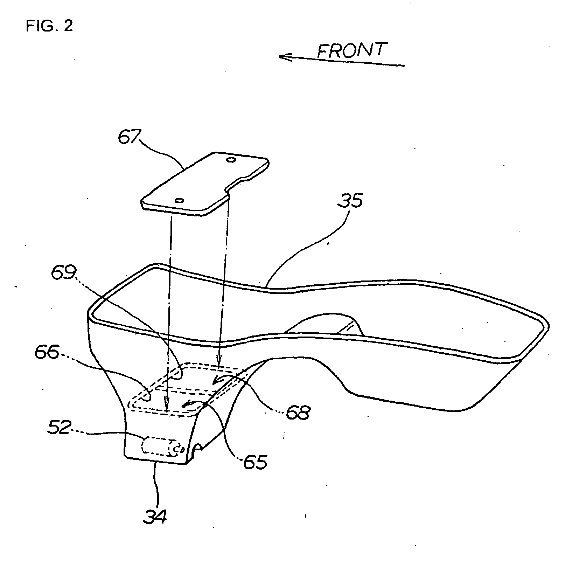

As shown in FIG. 2, the storage box 35 has the extension part 34 which extends toward the lower side of the vehicle. The extension part 24 includes a filter storing part 65 for storing the fuel filter 52 therein, and a maintenance lid 67 which is openably and closably (removably) provided at an opening 66 of the filter storing part 65 and which, when opened, permits maintenance of the fuel filter 52 to be performed through the storage box 35.

In addition, the storage box 35 includes a battery storing part 68 for storing a battery therein adjacently to the filter storing part 65, and an opening 69 of the battery storing part 68 can also be opened and closed with the maintenance lid 67.

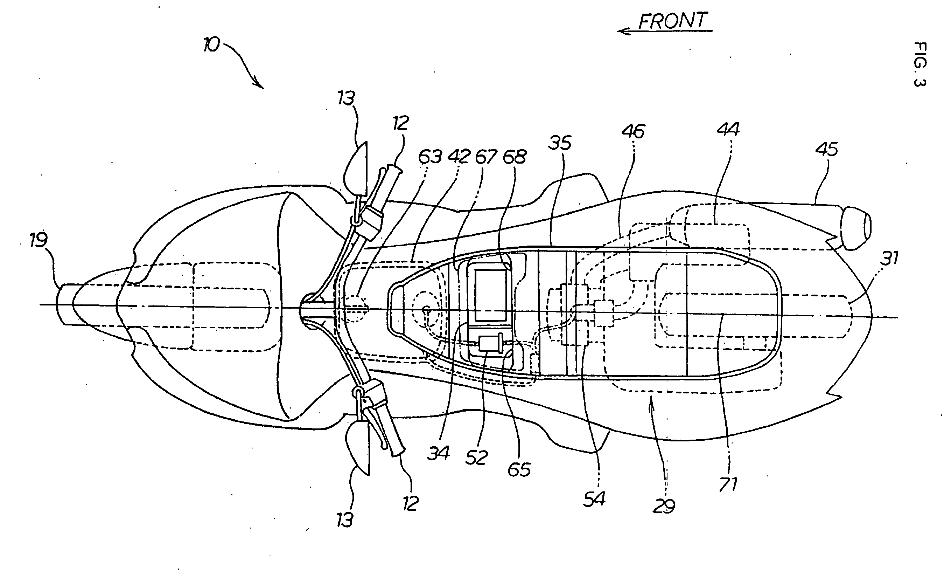

As shown in FIG. 3, the exhaust pipe 46 and the fuel filter 52 are laid out on opposite lateral sides of the vehicle with respect to the vehicle body centre line 71.

Since the extension part 34 of the storage box 35 is located between the fuel tank 42 and the cylinder unit 54 of the unit swing type engine 29, the capacity of the extension part 34 can be secured to be large, and the capacity of the filter storing part 65 can also be secured to be large. Consequently, a large-sized fuel filter 52 can be used.

The layout of the fuel filter 52 in plan view will now be described below.

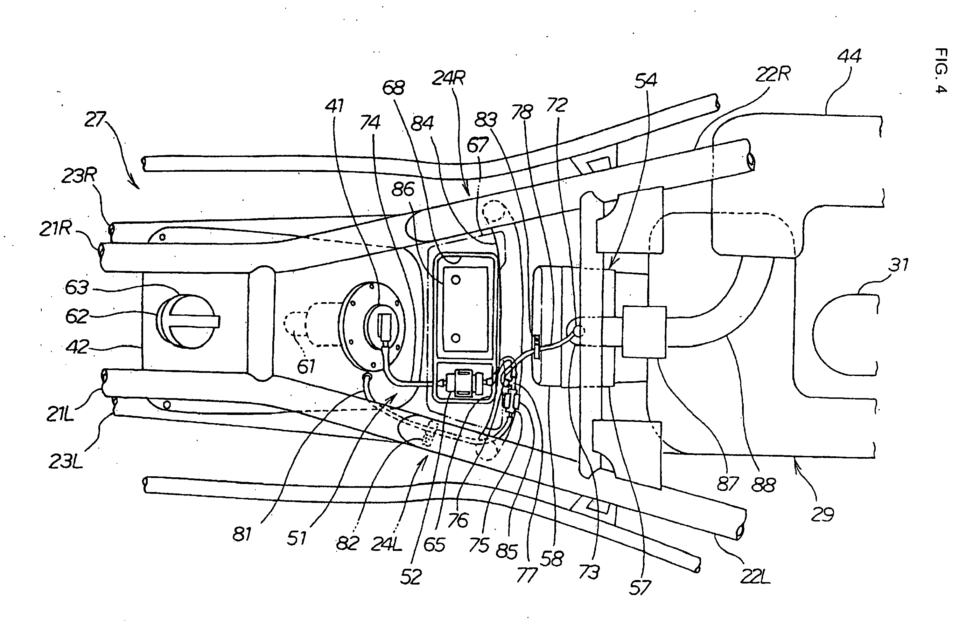

As shown in FIG. 4, the fuel supply line 51 for supplying the unit swing type engine 29 with the fuel is connected to the fuel tank 42. The fuel supply line 51 is provided with the pre-pump filter (61, see FIG. 1) for clarifying the fuel in the fuel tank 42, the fuel pump 41 disposed downstream of the pre-pump filter 61, the fuel filter 52 disposed downstream of the fuel pump 41 and set to have a finer pore size than the pre-pump filter 61, and an injector 72 as a fuel supply device for supplying the fuel to the unit swing type engine 29, which are laid out in this order along the fuel supply line 51.

In addition, these components are laid out in the order of fuel tank 42, the fuel filter 52, and the injector 72 from the front side, along the front-rear direction of the vehicle.

Incidentally, the pre-pump filter 61 and the fuel pump 41 are provided in the fuel tank 42, and the injector 72 is mounted to an intake pipe 73.

The fuel supply line 51 is composed of a first fuel pipe 74 which extends from the fuel pump 41 and connected to the fuel filter 52, a second fuel pipe 76 which extends from the fuel filter 52 and is connected to the upstream side of a pressure regulator 75, and a third fuel pipe 78 which extends from a branching part 77 disposed on the upstream side of the pressure regulator 75 and which is connected to the injector 72. By this configuration, the fuel in the fuel tank 42 is supplied from the injector 72 to the unit swing type engine 29 side.

Incidentally, the pressure regulator 75 returns a portion of the fuel to the fuel tank 42 through a return pipe 81 connecting the pressure regulator 75 and the fuel tank 42 to each other when the fuel pressure in the fuel supply line 51 between the fuel pump 41 and the injector 72 is increased to reach a predetermined pressure.

The return pipe 81 is held by a pipe clip 82 provided on the lower pipe 24L.

In addition, the third fuel pipe 78 is held by a pipe clip 83 provided on the head cover 58.

The body frame 27 has a cross frame 84 which is disposed between the fuel tank 42 and the unit swing type engine 29 and by which the pair of left and right lower pipes 24L and 24R are interconnected. The pressure regulator 75 is mounted to the cross frame 84 through a regulator clip 85, and is so disposed that the longitudinal direction of the pressure regulator 75 is set along the extending direction of the cross frame 84.

The fuel filter 52 is stored in the filter storing part 65, and a battery 86 is stored in the battery storing part 68.

An intake system is composed of the intake pipe 73 connected to an upper portion of the cylinder head 57, a throttle body 87 connected to the intake pipe 73, and an air cleaner 44 connected to the throttle body 87 through a connecting tube 88.

The injector 72 is mounted to the intake pipe 73, and the fuel is supplied to the unit swing type engine 29 side by the injector 72.

In addition, the pressure regulator 75 is disposed between the fuel filter 52 and the injector 72. As shown in FIG. 1, the injector 72 is disposed at a position above the fuel filter 52. Incidentally, it can also be said that the pressure regulator 75 is disposed between the second fuel pipe 76 and the third fuel pipe 78.

The filter storing part 65 will now be described.

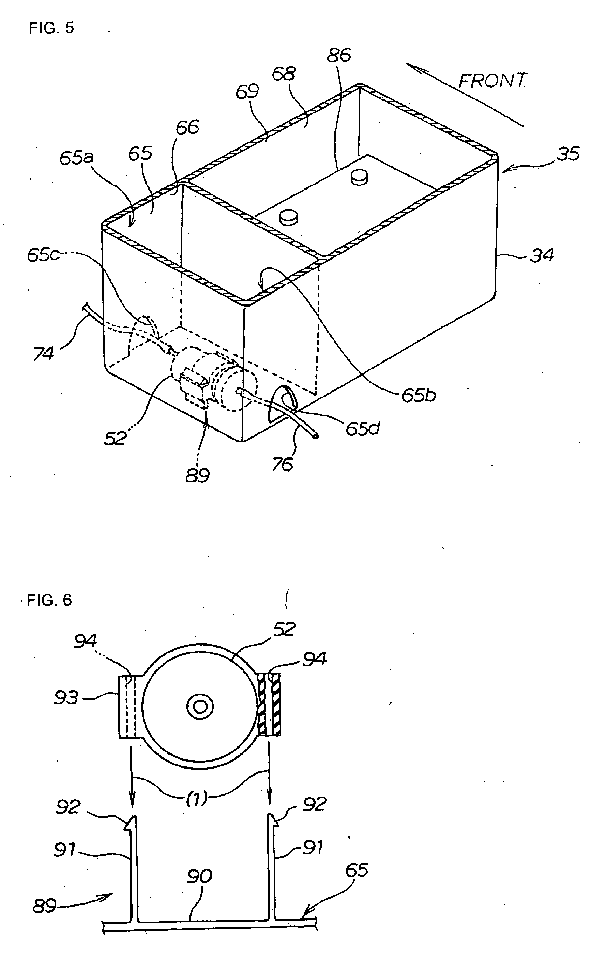

As shown in FIG. 5, the filter storing part 65 has a front wall 65a provided toward the vehicle front side, and a rear wall 65b provided toward the vehicle rear side. The front wall 65a is provided with a front-side opening 65c for the first fuel pipe 74, and the rear wall 65b is provided with a rear-side opening 65d for the second fuel pipe 76.

In addition, the fuel filter 52 is mounted to a mounting part 89 formed integrally with the filter storing part 65, and the mounting part 89 will now be described.

As shown in FIG. 6, the mounting part 89 is moulded integrally with the filter storing part 65, and is composed of two bracket parts 91 extending upwardly from a bottom surface 90 of the filter storing part 65, with claw parts 92 provided at the tips of the bracket parts 91. The fuel filter 52 is held by a rubber band 93, and the rubber band 93 is provided with two through-holes 94 for hooking the claw parts 92 thereon.

The rubber band 93 holding the fuel filter 52 is moved as indicated by arrows (1) in FIG. 6, and the claw parts 92 are hooked on the through-holes 94, whereby the fuel filter 52 is mounted to the mounting part 89.

The fuel filter 52 itself will now be described.

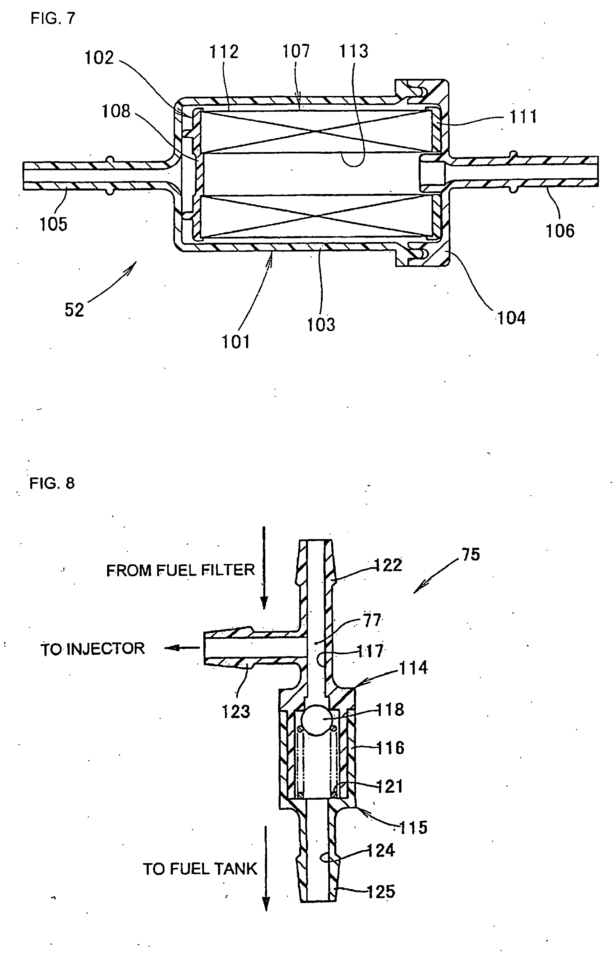

As shown in FIG. 7, the fuel filter 52 is composed of a filter case 101, and a filter assembly 102 contained in the filter case 101.

The filter case 101 is composed of a case body 103 having a bottomed tubular shape, and a case cover 104 for closing an opening part of the case body 103.

The case body 103 is provided with a fuel suction port 105 which is connected to the fuel pipe (74, see FIG. 4) on the fuel tank (42, see FIG. 4) side and through which the fuel is sucked in. The case cover 104 is provided with a fuel discharge port 106 which is connected to the fuel pipe (76, see FIG. 4) on the injector (72, see FIG. 4) side and through which the fuel is discharged.

The filter assembly 102 is composed of a cylindrical filter 107 made of filter paper, and frame bodies 108 and 111 for supporting both ends of the filter 107. The filter assembly 102 is fixed in the state of being clamped between the case body 103 and the case cover 104.

The fuel is sucked through the fuel suction port 105 into the filter case 101, then flows through the filter 107 from its outer peripheral surface 112 to its inner peripheral surface 113, wherein the fuel is filtered, and the filtered fuel is discharged through the fuel discharge port 106 to the exterior of the filter case 101.

The pressure regulator 75 will now be described.

As shown in FIG. 8, the pressure regulator 72 is composed of a case 116 comprising a first case 114 and a second case 115 joined to each other. The first case and the second case may be made of resin. A spherical valve element 118, preferably made from copper and for opening and closing a passage hole 117 bored in the bottom on one end side of the case 116, is held in place by a helical compression spring 121 for biasing the valve element 118 so as to close the passage hole 117. The regulator also includes a fuel suction port 122 in which the passage hole 117 is bored, a fuel discharge port 123 formed at an intermediate part of the fuel suction port 122, a fuel return port 125 provided with a passage hole 124 bored in the bottom on the other end side of the case 116, and a branching part 77 formed between the fuel suction port 122 and the fuel discharge port 123 on the upstream side of the valve element 118.

The fuel suction port 122 is connected to the fuel filter (52, see FIG. 4) through the second fuel pipe (76, see FIG. 4), whereas the fuel discharge port 123 is connected to the injector (72, see FIG. 4) through the third fuel pipe (78, see FIG. 4), and the fuel return port 125 is connected to the fuel tank (42, see FIG. 4) through the return pipe (81, see FIG. 4).

A system diagram will now be described.

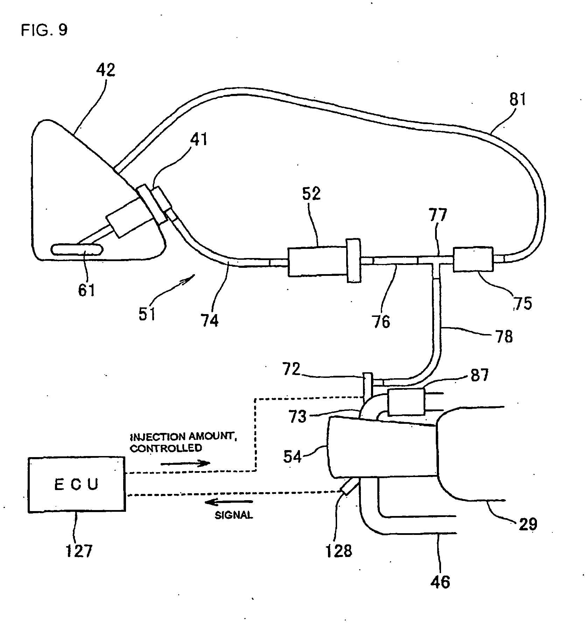

As shown in FIG. 9, the fuel in the fuel tank 42 is fed under pressure by the fuel pump 41 through the pre-pump filter 61, and is fed through the first fuel pipe 74, the fuel filter 52, the second fuel pipe 76, the branching part 77 of the pressure regulator 75, and the third fuel pipe 78, to be supplied from the injector 72 to the unit swing type engine 29 side.

The pressure regulator 75 returns a portion of the fuel to the fuel tank 42 through the return pipe 81 connecting the pressure regulator 75 and the fuel tank 42 to each other when the fuel pressure in the fuel supply line 51 between the fuel pump 41 and the injector 72 is increased to reach a predetermined pressure.

Even in the case where, for example, a mixed fuel of ethanol and gasoline is used and the mixing ratio is changed due to fuel supply, fuel injection optimal for starting can be performed and the unit swing type engine 29 can be started favourably, since the fuel before the change in the ethanol-gasoline mixing ratio is filling the fuel supply line 51 in the range from the fuel tank 42 to the fuel supply device 72 and this mixing ratio has already been learned by an ECU 127 mounted on the vehicle. In addition, after the starting of the unit swing type engine 29, the change in the mixing ratio is re-learned by the ECU 127 on the basis of a signal from, for example, an O₂ sensor 128 provided so as to project into the exhaust port of the cylinder unit 54, and the fuel injection amount at the injector 72 is controlled, so as to perform fuel injection optimal for the ethanol-gasoline mixing ratio after the starting of the unit swing type engine 29.

Example 2, a second embodiment of the present invention, will be described below. Incidentally, the same components as those shown in FIG. 1 are denoted by the same symbols as used above, and detailed descriptions of them will be omitted.

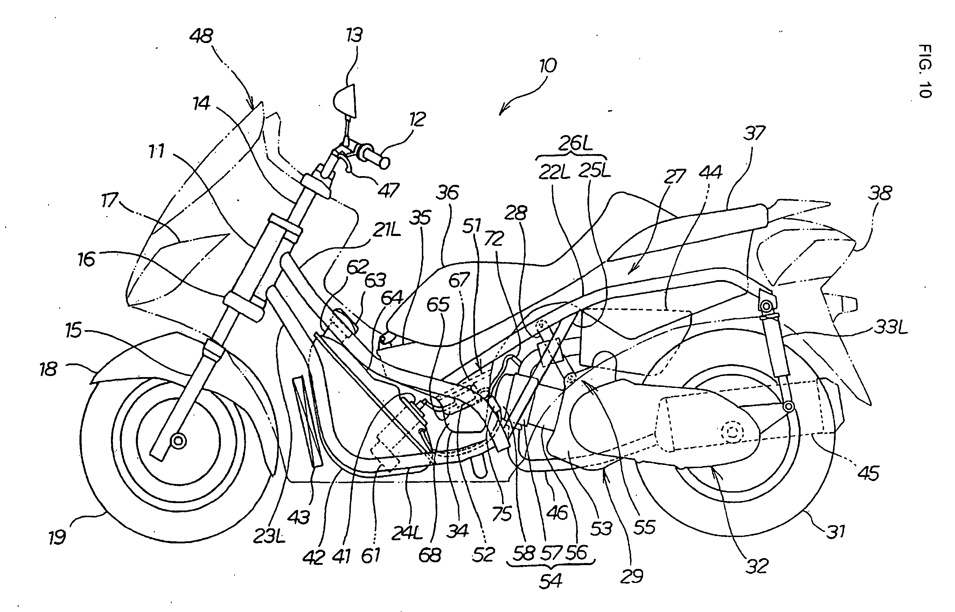

As shown in FIG. 10, the filter storing part 65 is located at a position above the battery storing part 68. This ensures that, at the time of maintenance of the fuel filter 52, a hand can easily reach the fuel filter 52 inside the storage box 35, so that the maintenance work can be carried out easily.

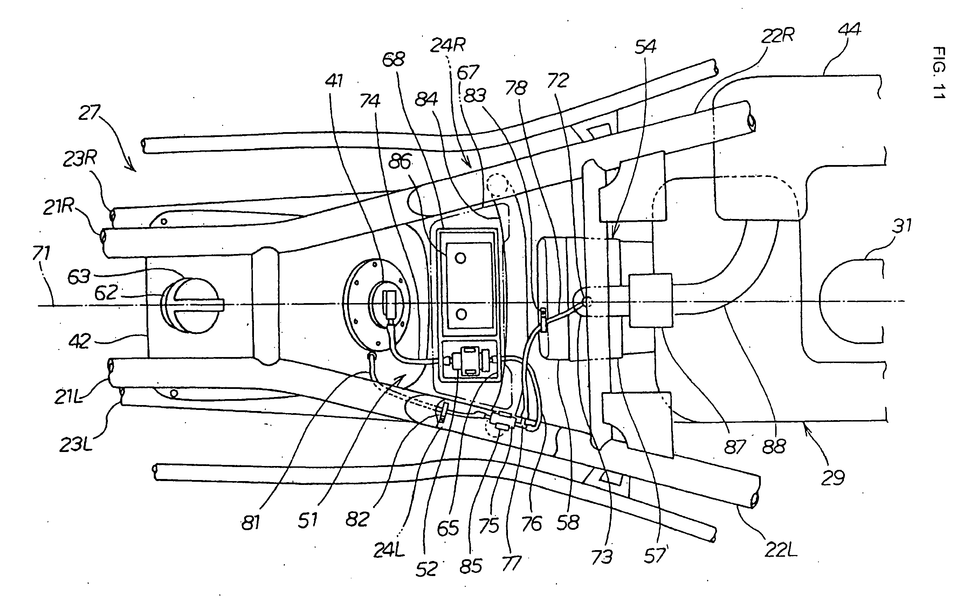

FIG. 11 is a view of the second embodiment, corresponding to FIG. 4. As shown in FIG. 11, the pressure regulator 75 is mounted to the main frame 21 L through a regulator clip 85. Incidentally, as shown in FIG. 10, the fuel filter 52 and the pressure regulator 75 are located at substantially the same height, in side view of the vehicle.

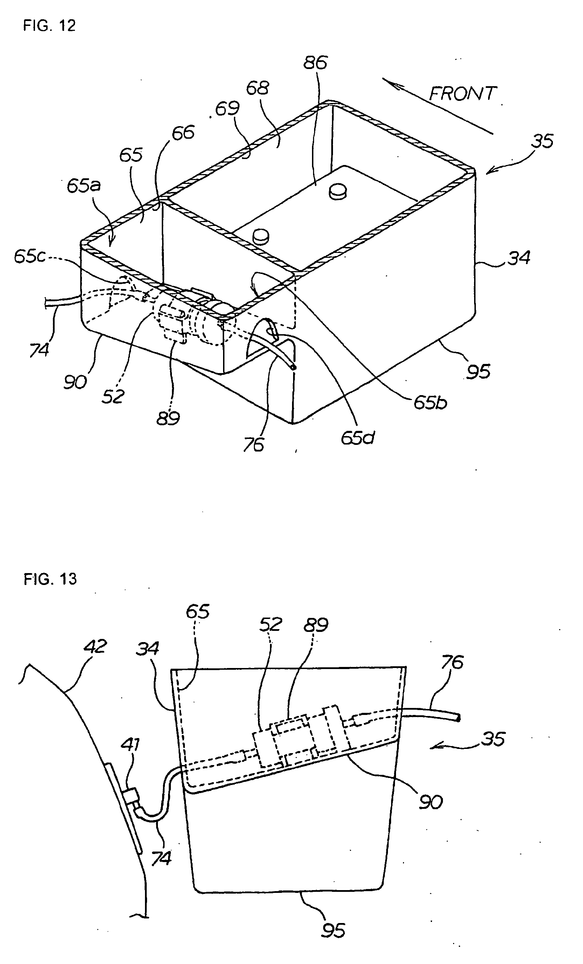

FIG. 12 is a view of the second embodiment, corresponding to FIG. 5. As shown in FIG. 12, the lower surface 90 of the filter storing part 65 is above a lower surface 95 of the battery storing part 68.

As shown in FIG. 13, the bottom surface 90 of the filter storing part 65 is inclined so as to be lower on the side of the fuel tank 42 disposed on the front side of the filter storing part 65.

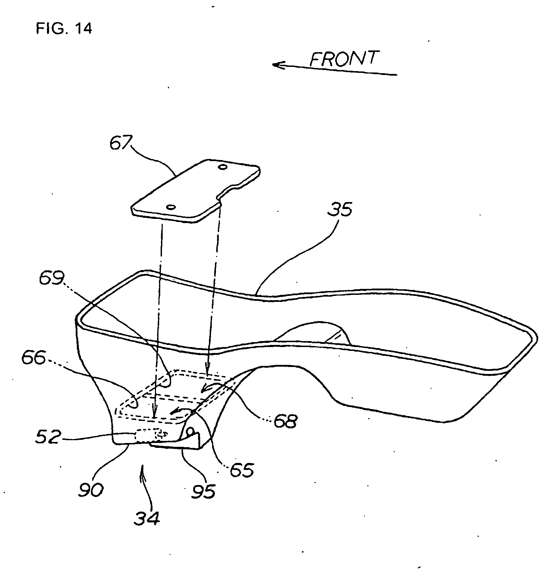

In addition, as shown in FIG. 14, the storage box 35 has the extension part 34 extending toward the lower side of the vehicle. The extension part 24 includes the filter storing part 65 for storing the fuel filter 52 therein, the battery storing part 68 for storing the battery (86, see FIG. 12) therein adjacently to the filter storing part 65, the opening 66 of the filter storing part 65, and the maintenance lid 67 which is openably and closably (removably) provided at the opening 69 of the battery storing part 68 and which, when opened, permits maintenance of the fuel filter 52 and the battery 86 to be performed through the storage box 35.

The above description will be summarized as follows.

As shown in FIGS. 1 and 10, the motorcycle 10 includes the storage box 35 which is open at an upper portion thereof, the seat (front seat) 36 which is provided on the upper side of the storage box 35 and with which the opening of the storage box 35 is opened and closed, the fuel supply line 51 through which the fuel in the fuel tank 42 is supplied to the unit swing type engine 29, and the fuel filter 52 disposed at an intermediate portion of the fuel supply line 51. In this motorcycle 10, the storage box 35 (as shown in FIGS. 2 and 14) includes the filter storing part 65 which is formed as one body with the storage box 35 and in which the fuel filter 52 is stored, and the maintenance lid 67 with which the opening 66 of the filter storing part 65 is opened and closed.

This configuration ensures that, at the time of maintenance of the fuel filter 52, the maintenance can be conducted by opening the seat 36 and the maintenance lid 67 in the storage box 35, and, therefore, the need to dismount the storage box 35 at the time of performing maintenance of the fuel filter 52 as in the prior art is eliminated. Accordingly, the maintenance work for the fuel filter 52 can be carried out easily.

Further, since the maintenance lid 67 for covering the opening 66 of the filter storing part 65 is provided, interference between the fuel filter 52 and other component parts stored in the storage box 35 can be prevented from occurring.

As shown in FIGS. 1 and 10 above, the filter storing part 52 is provided between the fuel tank 42 and the unit swing type engine 29.

This configuration ensures that, since the fuel filter 52 is disposed between the fuel tank 42 and the unit swing type engine 29, the fuel filter 52 can be disposed while preventing the fuel supply line 51 shown in FIG. 4 connecting the fuel tank 42 and the unit swing type engine 29 to each other from becoming redundant.

As shown in FIGS. 2 and 14 above, the storage box 35 includes the battery storing part 68 for storing the battery therein adjacently to the filter storing part 65, and the opening 69 of the battery storing part 68 can be opened and closed with the maintenance lid 67.

This configuration ensures that, since the maintenance lid 67 for the battery 86 and the maintenance lid 67 for the fuel filter 52 are both composed of a common lid 67, a reduction in the number of component parts can be contrived.

Furthermore, at the time of maintenance of the battery 86 or of the fuel filter 52, maintenance of the other of the two members can be performed simultaneously. Accordingly, maintenance work for the battery 86 and the fuel filter 52 can be carried out efficiently.

As shown in FIGS. 1 and 10 above, the fuel tank 42 is provided on the vehicle front side relative to the unit swing type engine 29; the unit swing type engine 29 is vertically swingably supported on the body frame 27 on the vehicle rear side of the fuel tank 42; and the storage box 35 extends toward the lower side of the vehicle in such a manner as to enter into the space between the fuel tank 42 and the unit swing type engine 29, and the filter storing part 65 and the battery storing part 68 are disposed in the downwardly extending lower portion.

This configuration ensures that, since the battery 86 which is a heavy member is disposed on the lower side in the vehicle, a lowering of the centre of gravity of the vehicle can be contrived.

Further, since the battery storing part 68 and the filter storing part 65 are both disposed on the front side of the unit swing type engine 29 which is swung in the vertical direction, the battery storing part 68 and the filter storing part 65 can be secured to be large and a large-sized fuel filter 52 can be used, without any restriction imposed by the swinging of the unit swing type engine 29 and without imposing any restriction on the swinging of the unit swing type engine 29.

As shown in FIGS. 12 and 13 above, the bottom surface 90 of the filter storing part 65 is above the bottom surface 95 of the battery storing part 68.

This configuration ensures that, at the time of maintenance of the fuel filter 52, it is easy for a hand to reach the fuel filter 52 inside the storage box 35. Accordingly, the maintenance work can be carried out easily.

As shown in FIGS. 12 and 13 above, the filter storing part 65 has the front wall 65a provided on the vehicle front side, and the rear wall 65b provided on the vehicle rear side; the front wall 65a is provided with the front-side opening 65c for piping the fuel supply line 51, whereas the rear wall 65b is provided with the rear-side opening 65d for piping the fuel supply line 51; and the bottom surface 90 of the filter storing part 65 is so inclined as to be lower on the side of the fuel tank 42 provided on the front side of the filter storing part 65.

This configuration ensures that, since the bottom surface 90 of the filter storing part 65 is so inclined as to be lower on the side of the fuel tank 42, even if a portion of the fuel drips from the fuel filter 52 at the time when the fuel filter 52 is dismounted, the dripped fuel can flow to the fuel tank side.

As shown in FIGS. 1 and 10 above, the fuel supply line 51 is provided with the fuel supply device 72 by which the fuel in the fuel tank 42 is supplied to the unit swing type engine 29, and with the fuel pump 41 by which the fuel in the fuel tank 42 is fed under pressure to the fuel supply device 72, and the fuel supply device 72 is disposed at a position above the fuel filter 52.

This configuration ensures that, since the fuel supply device 72 is disposed at a position above the fuel filter 52, the fuel supply line 51 between the fuel filter 52 and the fuel supply device 72 extends upward from the fuel filter 52. Therefore, leakage of the fuel from the fuel supply device 72 due to the weight of the fuel collected in the fuel filter 52 can be restrained, even when the vehicle is parked for a long period of time.

As shown in FIGS. 4 and 11 above, the fuel supply line 51 is provided with the pressure regulator 75 which is disposed between the fuel filter 52 and the fuel supply device 72 and by which a portion of the fuel is returned to the fuel tank 42 when the fuel pressure between the fuel pump 41 and the fuel supply device 72 is increased to reach a predetermined pressure, and the pressure regulator 75 is disposed between the fuel pump 41 and the fuel supply device 72 in the vehicle front-rear direction.

This configuration ensures that, since the pressure regulator 75 is disposed between the fuel pump 41 and the fuel supply device 72 in the vehicle front-rear direction, the fuel supply line 51 from the fuel pump 41 to the fuel supply device 72 can be prevented from becoming redundant.

As shown in FIG. 9 above, the fuel supply line 51 is provided with the pre-pump filter 61 on the upstream side of the fuel pump 41, and the fuel filter 52 is set to have a finer pore size than the pre-pump filter 61.

This configuration ensures that, since the pore size of the fuel filter 52 and the pore size of the pre-pump filter 61 are set to be different, it is possible, even in the case of using a fuel in which fine dust is contained such as ethanol, to trap coarser dust by the pre-pump filter 61 and to trap by the fuel filter 52 the finer dust which is not trapped by the pre-pump filter 61. Accordingly, such a fuel as ethanol can be used.

In addition, since coarser dust is trapped by the pre-pump filter 61 and therefore coarser dust is not trapped by the fuel filter 52, the possibility of clogging of the fuel filter 52 can be lowered, and the frequency of replacement of the fuel filter 52 can be reduced. Furthermore, the pre-pump filter 61 is coarse in pore size and therefore the possibility of clogging of the pre-pump filter 61 can be lowered, so that the pre-pump filter 61 is prevented from constituting a resistance against the operation of the fuel pump 41. Accordingly, an inexpensive fuel pump 41 can be adopted.

Accordingly, replacement cycle times of the pre-pump filter 61 and the fuel filter 52 can both be prolonged, the number of times of maintenance can be reduced, and the flow rate of the fuel passing through the pre-pump filter 61 and the fuel filter 52 can be maintained favourably.

Incidentally, application of the present example is not limited to the motorcycle 10 on which an engine using gasoline as a fuel is mounted; for instance, the present example may be applied to a motorcycle 10 on which a unit swing type engine 29 using such a bio-fuel as ethanol as a fuel is mounted, insofar as the fuel can be clarified by the fuel filter 52.

The present invention is preferable for an improvement in a motorcycle, specifically, for layout of a fuel filter provided in a motorcycle.

## Claims

1. A motorcycle (10) comprising a storage box (35) which is open at an upper portion thereof, a seat (36) which is provided on the upper side of the storage box (35) and with which an opening of the storage box (35) can be opened and closed, a fuel supply line (51) through which a fuel in a fuel tank (42) is supplied to an engine (29), and a fuel filter (52) disposed at an intermediate portion of the fuel supply line (51),
**characterized in that** the storage box (35) comprises a filter storing part (65) which is formed as one body with the storage box (35) and in which the fuel filter (52) is stored, and a maintenance lid (67) with which an opening (66) of the filter storing part (65) can be opened and closed.

2. The motorcycle according to claim 1, wherein the filter storing part (65) is provided between the fuel tank (42) and the engine (29).

3. The motorcycle according to claim 1 or claim 2, wherein the storage box (35) also comprises a battery storing part (68) for storing a battery (86) therein adjacently to the filter storing part (65), and an opening (69) of the battery storing part (68) can also be opened and closed with the maintenance lid (67).

4. The motorcycle according to claim 3,
wherein the fuel tank (42) is provided forwardly of the engine (29);
the engine (29) is vertically swingably supported on a body frame (27) rearwardly of the fuel tank (42); and
the storage box (35) extends toward the lower side of the vehicle in such a manner as to enter into a space between the fuel tank (42) and the engine (29), and the filter storing part (65) and the battery storing part (68) are disposed in the downwardly extending lower portion.

5. The motorcycle according to claim 3 or claim 4, wherein a bottom surface (90) of the filter storing part (65) is above a bottom surface (94) of the battery storing part (68).

6. The motorcycle according to claim 5,
wherein the filter storing part (65) has a front wall (65a) and a rear wall (65b);
wherein the front wall (65a) is provided with a front-side opening (65c) for the fuel supply line (51), and the rear wall (65b) is provided with a rear-side opening (65d) for the fuel supply line (51); and
the bottom surface (90) of the filter storing part (65) is inclined so as to be lower on the side of the fuel tank (42) provided on the front side of the filter storing part (65).

7. The motorcycle according to any preceding claim,
wherein the fuel supply line (51) is provided with a fuel supply device (72) by which the fuel in the fuel tank (42) is supplied to the engine (29), and with a fuel pump (41) by which the fuel in the fuel tank (42) is fed under pressure to the fuel supply device (72); and
the fuel supply device (72) is disposed at a position above the fuel filter (52).

8. The motorcycle according to claim 7,
wherein the fuel supply line (51) is provided with a pressure regulator (75) which is disposed between the fuel filter (52) and the fuel supply device (72) and by which a portion of the fuel is returned to the fuel tank (42) when the fuel pressure between the fuel pump (41) and the fuel supply device (72) is increased to reach a predetermined pressure, and
the pressure regulator (75) is disposed between the fuel pump (41) and the fuel supply device (75) in the vehicle front-rear direction.

9. The motorcycle according to any preceding claim,
wherein the fuel supply line (51) is provided with a pre-pump filter (61) upstream of the fuel pump (41), and
the fuel filter (52) is set to have a finer pore size than the pre-pump filter (61).

## Patentansprüche

1. Motorrad (10) mit einem Staufach (35), das an einem oberen Abschnitt davon offen ist, einem Sitz (36), der an der oberen Seite des Staufachs (35) vorgesehen ist und mit dem eine Öffnung des Staufachs (35) geöffnet und verschlossen werden kann, einer Kraftstoffzufuhrleitung (51), durch die ein Kraftstoff in einem Kraftstofftank (42) einem Motor (29) zugeführt wird, und einem Kraftstofffilter (52), der an einem mittleren Abschnitt der Kraftstoffzufuhrleitung (51) angeordnet ist, **dadurch gekennzeichnet, dass** das Staufach (35) einen Filterverstauteil (65), der einteilig mit dem Staufach (35) ausgebildet ist und in dem der Kraftstofffilter (52) verstaut ist, und einen Wartungsdeckel (67) umfasst, mit dem eine Öffnung (66) des Filterverstauteils (65) geöffnet und verschlossen werden kann.

2. Motorrad nach Anspruch 1, wobei der Filterverstauteil (65) zwischen dem Kraftstofftank (42) und dem Motor (29) vorgesehen ist.

3. Motorrad nach Anspruch 1 oder 2, wobei das Staufach (35) auch einen Batterieverstauteil (68) zum Verstauen einer Batterie (86) darin neben dem Filterverstauteil (65) umfasst und wobei eine Öffnung (69) des Batterieverstauteils (68) auch mit dem Wartungsdeckel (67) geöffnet und verschlossen werden kann.

4. Motorrad nach Anspruch 3,
wobei der Kraftstofftank (42) vor dem Motor (29) vorgesehen ist,
der Motor (29) vertikal schwingbar an einem Karosserierahmen (27) hinter dem Kraftstofftank (42) gestützt ist und
sich das Staufach (35) so zur unteren Seite des Fahrzeugs erstreckt, dass es in einen Raum zwischen dem Kraftstofftank (42) und dem Motor (29) eintritt, und der Filterverstauteil (65) und der Batterieverstauteil (68) in dem sich nach unten erstreckenden unteren Abschnitt angeordnet sind.

5. Motorrad nach Anspruch 3 oder 4, wobei eine Bodenfläche (90) des Filterverstauteils (65) über einer Bodenfläche (94) des Batterieverstauteils (68) liegt.

6. Motorrad nach Anspruch 5,
wobei der Filterverstauteil (65) eine vordere Wand (65a) und eine hintere Wand (65b) hat,
wobei die vordere Wand (65a) mit einer Öffnung (65c) an der Vorderseite für die Kraftstoffzufuhrleitung (51) versehen ist und die hintere Wand (65b) mit einer Öffnung (65d) an der Rückseite für die Kraftstoffzufuhrleitung (51) versehen ist, und die Bodenfläche (90) des Filterverstauteils (65) so geneigt ist, dass sie an der an der Vorderseite des Filterverstauteils (65) vorgesehenen Seite des Kraftstofftanks (42) niedriger ist.

7. Motorrad nach einem der vorhergehenden Ansprüche, wobei die Kraftstoffzufuhrleitung (51) mit einer Kraftstoffzufuhrvorrichtung (72), durch die der Kraftstoff im Kraftstofftank (42) dem Motor (29) zugeführt wird, und mit einer Kraftstoffpumpe (41) versehen ist, mit der der Kraftstoff im Kraftstofftank (42) unter Druck der Kraftstoffzufuhrvorrichtung (72) zugeführt wird, und
die Kraftstoffzufuhrvorrichtung (72) an einer Position über dem Kraftstofffilter (52) angeordnet ist.

8. Motorrad nach Anspruch 7,
wobei die Kraftstoffzufuhrleitung (51) mit einem Druckregler (75) versehen ist, der zwischen dem Kraftstofffilter (52) und der Kraftstoffzufuhrvorrichtung (72) angeordnet ist und durch den ein Teil des Kraftstoffs in den Kraftstofftank (42) zurückgeführt wird, wenn der Kraftstoffdruck zwischen der Kraftstoffpumpe (41) und der Kraftstoffzufuhrvorrichtung (72) erhöht ist, so dass er einen vorbestimmten Druck erreicht, und
der Druckregler (75) zwischen der Kraftstoffpumpe (41) und der Kraftstoffzufuhrvorrichtung (75) in der Längsrichtung des Fahrzeugs angeordnet ist.

9. Motorrad nach einem der vorhergehenden Ansprüche, wobei die Kraftstoffzufuhrleitung (51) stromaufwärts von der Kraftstoffpumpe (41) mit einem Vorpumpenfilter (61) versehen ist und
der Kraftstofffilter (52) so eingestellt ist, dass er eine feinere Porengröße als der Vorpumpenfilter (61) hat.

## Revendications

1. Motocyclette (10) comprenant un coffre de rangement (35) qui est ouvert au niveau d'une portion supérieure de celui-ci, un siège (36) qui est situé sur le côté supérieur du coffre de rangement (35) et avec lequel une ouverture du coffre de rangement (35) peut être ouverte et fermée, une conduite d'alimentation en carburant (51) au moyen de laquelle un carburant dans un réservoir de carburant (42) est fourni à un moteur (29) et un filtre à carburant (52) disposé au niveau d'une portion intermédiaire de la conduite d'alimentation en carburant (51),
**caractérisée en ce que** le coffre de rangement (35) comprend une partie de rangement de filtre (65) qui est formée d'un seul tenant avec le coffre de rangement (35) et dans laquelle le filtre à carburant (52) est rangé et un couvercle d'entretien (67) avec lequel une ouverture (66) de la partie de rangement de filtre (65) peut être ouverte et fermée.

2. Motocyclette selon la revendication 1, dans laquelle la partie de rangement de filtre (65) est située entre le réservoir de carburant (42) et le moteur (29).

3. Motocyclette selon la revendication 1 ou la revendication 2, dans laquelle le coffre de rangement (35) comprend également une partie de rangement de batterie (68) pour y ranger une batterie (86) à proximité de la partie de rangement de filtre (65) et une ouverture (69) de la partie de rangement de batterie (68) peut également être ouverte et fermée avec le couvercle d'entretien (67).

4. Motocyclette selon la revendication 3,
dans laquelle le réservoir de carburant (42) est situé en avant du moteur (29) ;
le moteur (29) est supporté verticalement de manière pivotante sur un cadre de carrosserie (27) en arrière du réservoir de carburant (42) ; et
le coffre de rangement (35) s'étend en direction du côté inférieur du véhicule de manière à pénétrer à l'intérieur d'un espace entre le réservoir de carburant (42) et le moteur (29), et la partie de rangement de filtre (65) et la partie de rangement de batterie (68) sont disposées dans la portion inférieure s'étendant vers le bas.

5. Motocyclette selon la revendication 3 ou la revendication 4, dans laquelle une surface inférieure (90) de la partie de rangement de filtre (65) est au-dessus d'une surface inférieure (94) de la partie de rangement de batterie (68).

6. Motocyclette selon la revendication 5,
dans laquelle la partie de rangement de filtre (65) a une paroi avant (65a) et une paroi arrière (65b) ;
dans laquelle la paroi avant (65a) est pourvue d'une ouverture côté avant (65c) pour la conduite d'alimentation en carburant (51) et la paroi arrière (65b) est pourvue d'une ouverture côté arrière (65d) pour la conduite d'alimentation en carburant (51) ; et
la surface inférieure (90) de la partie de rangement de filtre (65) est inclinée de manière à être plus basse sur le côté du réservoir de carburant (42) situé sur le côté avant de la partie de rangement de filtre (65).

7. Motocyclette selon l'une quelconque des revendications précédentes,
dans laquelle la conduite d'alimentation en carburant (51) est pourvue d'un dispositif d'alimentation en carburant (72) au moyen duquel le carburant dans le réservoir de carburant (42) est fourni au moteur (29) et d'une pompe à carburant (41) au moyen de laquelle le carburant dans le réservoir de carburant (42) est acheminé sous pression jusqu'au dispositif d'alimentation en carburant (72) ; et
le dispositif d'alimentation en carburant (72) est disposé à une position au-dessus du filtre à carburant (52).

8. Motocyclette selon la revendication 7,
dans laquelle la conduite d'alimentation en carburant (51) est pourvue d'un régulateur de pression (75) qui est disposé entre le filtre à carburant (52) et le dispositif d'alimentation en carburant (72) et au moyen duquel une partie du carburant est renvoyée jusqu'au réservoir de carburant (42) lorsque la pression de carburant entre la pompe à carburant (41) et le dispositif d'alimentation en carburant (72) est augmentée jusqu'à atteindre une pression prédéterminée, et le régulateur de pression (75) est disposé entre la pompe à carburant (41) et le dispositif d'alimentation en carburant (75) dans la direction avant-arrière du véhicule.

9. Motocyclette selon l'une quelconque des revendications précédentes,
dans laquelle la conduite d'alimentation en carburant (51) est pourvue d'un filtre avant la pompe (61) situé en amont de la pompe à carburant (41), et
le filtre à carburant (52) est ajusté de manière à présenter une dimension de pores plus fine que le filtre avant la pompe (61).
